# EUROPÄISCHE PATENTSCHRIFT

(11) **EP 0 580 654 B1**
(45) Veröffentlichungstag und Bekanntmachung des Hinweises auf die Patenterteilung: **14.12.1994**
(21) Anmeldenummer: 92908075.2
(22) Anmeldetag: 03.04.1992
(51) Int. Cl.: B62D 25/04

(54) **KAROSSERIE EINES PERSONENKRAFTWAGENS**
PASSENGER CAR BODYSHELL
CARROSSERIE DE VOITURE PARTICULIERE

(30) Priorität: 19.04.1991 DE 4112844
(43) Veröffentlichungstag der Anmeldung: 02.02.1994
(73) Patentinhaber: AUDI AG, 85002 Ingolstadt (DE)
(72) Erfinder: ENNING, Norbert, D-8071 Denkendorf (DE); TIMM, Heinrich, D-8070 Ingolstadt (DE)
(74) Vertreter: Engelhardt, Harald
(86) Internationale Anmeldenummer: EP9200750
(87) Internationale Veröffentlichungsnummer: WO9218368

(56) Entgegenhaltungen:
- EP-A- 0 146 716
- DE-A- 1 480 483
- DE-A- 1 630 211
- DE-A- 4 030 171
- FR-A- 2 521 920
- GB-A- 410 510

## Beschreibung

Die Erfindung betrifft eine Karosserie eines Personenkraftwagens nach dem Oberbegriff des Anspruchs 1.

Eine allgemein bekannte, übliche Karosserie eines Personenkraftwagens enthält einen vorderen Türausschnitt, der unten durch einen Schweller und im vorderen Bereich durch einen Pfosten (Pfosten A) begrenzt ist.

Dieser vordere Pfosten ist im unteren Bereich als Türpfosten (Pfosten A unten) stabil mit relativ großem Querschnitt ausgeführt. An diesem Türpfosten ist eine Fahrzeugtür schwenkbar gelagert. Die große Stabilität des Türpfostens ist einerseits erforderlich, um die relativ schwere Fahrzeugtür abzustützen und andererseits stellt dieser Türpfosten einen wesentlichen Träger zur Herstellung der erforderlichen Karosseriesteifigkeit im Vorderwagen hinsichtlich der Tragfähigkeit und des Crashverhaltens dar.

An den Türpfosten (Pfosten A unten) schließt sich nach oben zum Dach hin ein weniger stabiler Bereich (Pfosten A oben) als seitlicher Fensterholm an. Dieser Fensterholm ist möglichst schlank auszuführen, damit er den Sichtwinkel im Bereich der Front- und Seitenscheibe möglichst wenig verdeckt. Damit ist zwangsläufig auch die Stabilität im Vergleich zum Türpfosten, für den genügend Raum für einen großen Querschnitt zur Verfügung steht, erheblich geringer. Daher stellt der Fensterholm (Pfosten A oben) bezüglich Steifigkeit und Dacheindrückung eine bekannte Schwachstelle in der Tragstruktur jeder Karosserie dar.

Übliche, vordere Fahrzeugtüren bestehen aus dem Türkasten, einem daran nach oben anschließenden Fensterrahmen und einer Fensterscheibe, die in Scheibenführungen in den Türkasten absenkbar ist. Der seitliche Fensterholm am Türausschnitt und damit auch der vordere Fensterrahmenholm verlaufen wegen der Schrägstellung der Frontscheibe ebenfalls schräg nach hinten oben. Dadurch ist zwischen der Oberseite des Türkastens als Fensterbrüstung und dem vorderen Fensterrahmenholm ein dreieckiger Bereich gebildet. Bei vielen Türkonstruktionen ist dieser Bereich als blinde, dreieckige Platte, als sogenanntes "Spiegeldreieck", ausgeführt. An einem solchen Spiegeldreieck ist, wie der Name besagt, oft ein Außenspiegel befestigt. Zudem wird durch die freie Dreiecksflächenkante eine Verlängerung der Seitenscheibenführung über die Fensterbrüstung nach oben hinaus möglich.

Die Erfindung geht von einer bekannten Karosserie aus (DE 40 30 171 A1), mit einem Pfosten A bestehend aus einem stabilen Türpfosten (Pfosten A unten) mit großem Querschnitt und einem anschließenden, seitlichen Fensterholm (Pfosten A oben) mit geringerer Stabilität und kleinerem Querschnitt sowie einer Fahrzeugtür mit einem Spiegeldreieck, bei der zur Erhöhung der Steifigkeit am Fensterholm der Türpfosten nach oben über die Fensterbrüstung hinaus geführt und vom Spiegeldreieck abgedeckt ist. Die übliche, im wesentlichen senkrechte Stellung des Türpfostens wurde beibehalten, so daß der Türausschnitt für einen Einstieg relativ eng ist.

Übliche selbsttragende Fahrzeugkarosserien für Personenkraftwagen sind aus Blechteilen hergestellt. Träger mit Hohlprofilen werden dabei jeweils aus wenigstens zwei tiefgezogenen und miteinander verschweißten Blechen hergestellt.

Die zum Aufbau solcher selbsttragenden Karosserien verwendeten Stahlbleche werden im Tiefziehverfahren verformt. Die Preßwerkzeuge zum Verformen der Bleche sind verhältnismäßig teuer, lassen jedoch hohe Stückzahlen zu, so daß für eine Großserlenfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht.

Aufgabe der Erfindung ist es, bei einer gattungsgemäßen Karosserie eine Verbesserung der Einstiegssituation zu erreichen.

Diese Aufgabe wird mit den kennzeichnenden Merkmalen des Anspruchs 1 gelöst.

Gemäß Anspruch 1 ist der Türpfosten stark geneigt, wobei er schwellerseitig mit seinem unteren Türpfostenende möglichst weit vorne liegt und mit seinem oberen Türpfostenende in den Bereich hinter das Spiegeldreieck geführt ist, bzw. dort der Übergang in den schlanken Fensterholm erfolgt.

Durch das nach vorne verlegte, untere Türpfostenende und die damit erreichte Schrägstellung wird die Einstiegssituation wesentlich verbessert, da die Beine beim Einsteigen nicht stark abgewinkelt werden müssen. Das obere Türpfostenende ist hier hinter das Spiegeldreieck geführt, so daß die freie Biegelänge des schlanken Fensterholms wesentlich verkürzt und damit die Steifigkeit und der Widerstand gegen eine Dacheindrückung verbessert sind. Zudem ist bei der geneigten Türpfostenanordnung auch die Öffnungsdiagonale des Türausschnitts gegenüber der Anordnung nach dem Stand der Technik verringert, so daß der Schutz bei einem Seitenaufprall erhöht ist.

Je nach Ausführung der Karosserie kann es erforderlich sein, das obere Türpfostenende, bezogen auf die Fahrzeuglängsachse, nach hinten und/oder nach innen geneigt auszuführen. Die Neigung des oberen Endes nach innen kann beispielsweise notwendig sein, wenn durch die Fahrzeugform bedingt das Spiegeldreieck an der Tür relativ weit innen liegt und der Türpfosten sonst nicht dahinter verlaufen könnte.

Je nach den konstruktiven Gegebenheiten kann es nach Anspruch 2 vorteilhaft sein, das obere Türpfostenende im Querschnitt zum Anschluß an den schlankeren Fensterholm zu verringern, das heißt, den Türpfosten nicht mit seinem großen Profilquerschnitt bis hinter das Spiegeldreieck zu führen, sondern dort bereits den Querschnitt etwas zu verjüngen.

Besonders vorteilhaft ist die erfindungsgemäße Pfostenausführung einsetzbar, wenn nach Anspruch 3 die Karosserie als Leichtmetall-Karosserie ausgeführt ist und der Türpfosten und der Fensterholm Leichtmetall-Strangprofile unterschiedlicher Querschnitte sind, die dann hinter dem Spiegeldreieck zusammengeführt und verbunden sind.

Anhand einer Zeichnung wird die Erfindung mit weiteren Einzelheiten, Merkmalen und Vorteilen näher erläutert.

In der einzigen Figur ist ein Türausschnitt 1 einer Fahrzeugkarosserie dargestellt, der unten durch einen Schweller 2, im vorderen Bereich durch einen Pfosten 3 (Pfosten A) nach hinten durch einen Mittelpfosten 4 (Pfosten B) und nach oben durch einen Dachholm 5 begrenzt ist.

Der vordere Pfosten 3 besteht aus einem unteren Bereich als Türpfosten 6 (Pfosten A unten) und einem im Bereich einer Fensterbrüstung 7 (strichliert eingezeichnet) anschließenden und entsprechend der Neigung der Frontscheibe schräg stehenden Fensterholm 8 (Pfosten A oben).

Der Türpfosten 6 hat aufgrund der Anforderung nach großer Tragfähigkeit und Stabilität einen relativ großen Querschnitt; der daran anschließende Fensterholm 8 ist dagegen relativ schlank ausgeführt, damit für einen Fahrer nur eine geringe Sichtwinkelverdeckung durch den Fensterholm 8 vorliegt.

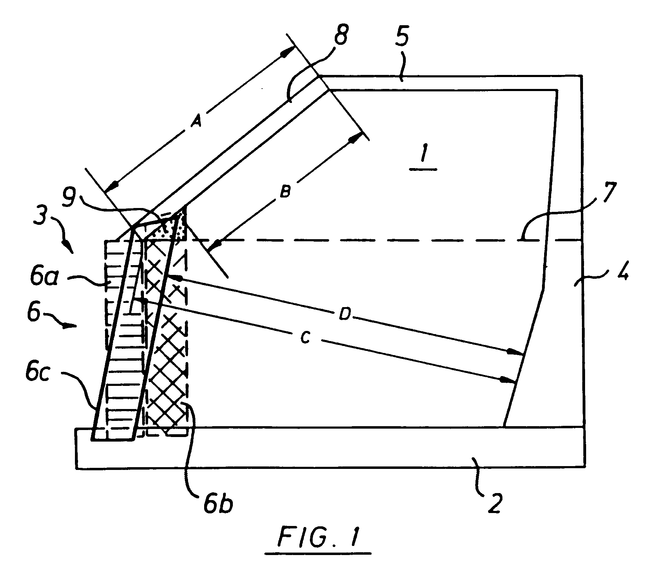

Am Türpfosten 6 ist eine (nicht dargestellte) Fahrzeugtür schwenkbar gelagert, die zwischen dem Türkasten in Höhe der Fensterbrüstung 7 und dem entsprechend dem Fensterholm 8 geneigten Fensterrahmenholm ein blindes Dreieck, das sogenannte "Spiegeldreieck" aufweist. Die Lage dieses Spiegeldreiecks 9 ist für eine geschlossene Fahrzeugtür in Fig. 1 eingezeichnet (punktierte Dreiecksfläche).

Für einen besseren Vergleich ist in Fig. 1 die Lage des Türpfostens 6 für drei alternative Ausführungsformen eingezeichnet:

Für die erste Ausführungsform, die dem allgemein bekannten, üblichen Stand der Technik entspricht, ist der Türpfosten 6a waagrecht schraffiert und etwa senkrecht vor dem Bereich des Spiegeldreiecks 9 angeordnet. Der daran nach oben schräg anschließende Fensterholm 8 hat in dieser Ausführung die eingezeichnete, freie Biegelänge A.

Entsprechend einer zweiten, bekannten Ausführungsform (FR 2 521 920 A1) ist der Türpfosten 6b kariert schraffiert und zur Mitte des Türausschnitts 1 hin unter den Bereich des Spiegeldreiecks 9 verschoben und zugleich über die Fensterbrüstung 7 nach oben hinaus verlängert. Dieses obere, verlängerte Türpfostenende wird vom Spiegeldreieck 9 abgedeckt. Der Fensterholm 9 ist damit weiter oben am Türpfosten 6b angesetzt und somit kürzer ausgebildet. Die freie Biegelänge ist damit gegenüber der Länge A auf die Länge B verkürzt.

In der dritten, erfindungsgemäßen Ausführungsform ist der Türpfosten 6c geneigt und mit stärkeren Linien eingezeichnet. Die starke Neigung des Türpfostens wird dadurch erreicht, daß er schwellerseitig mit seinem unteren Türpfostenende möglichst weit vorne angesetzt ist und schräg nach oben mit seinem oberen Ende hinter das Spiegeldreieck 9 reicht, wodurch auch hier die freie Biegelänge (B) des Fensterholms 9 vorteilhaft kurz ist. Im unteren Bereich wird wegen der nach vorne gezogenen Schrägstellung des Türpfostens 6c die Einstiegssituation verbessert: Zudem wird aber auch die Öffnungsdiagonale (Länge D) gegenüber der Ausführung nach dem Stand der Technik (Türpfosten 6a; Länge C) deutlich verringert. Durch diese Verringerung der Öffnungsdiagonale des Türausschnitts werden die Kräfte bei einem Seitenaufprall besser in die Tragstruktur geleitet. Bei einer entsprechenden Türverstärkung kann zudem die Fahrzeugtür besser abgestützt werden.

Ersichtlich bedeutet die Weiterführung des großvolumigen Türpfostens 6c hinter das Spiegeldreieck keine Beeinträchtigung des Sichtwinkels, da lediglich die ohnehin vorhandene Sichtwinkelverdeckung des Spiegeldreiecks 9 mit benutzt wird.

Der Türpfosten 6 und der Fensterholm 8 sind als Aluminium-Strangprofile unterschiedlichen Querschnitts ausgeführt.

Mit der erfindungsgemäßen Anordnung des Türpfostens 6 werdeb in Verbindung mit einer verbesserten Einstiegssituation eine Verbesserung der Karosseriesteifigkeit und des Crashverhaltens im Bereich des vorderen Türausschnitts erreicht.

## Patentansprüche

1. Karosserie eines Personenkraftwagens,
mit einem vorderen Türausschnitt (1), der unten durch einen Schweller (2) und im vorderen Bereich durch einen Pfosten (3) (Pfosten A) begrenzt ist, wobei dieser Pfosten (3) im unteren Bereich als Türpfosten (6) (Pfosten A unten) stabil ausgeführt ist und sich daran nach oben zum Dach (5) ein weniger stabiler Bereich (Pfosten A oben) als seitlicher Fensterholm (8) mit kleinerem Querschnitt anschließt und
mit einer Fahrzeugtür, die am Türpfosten (6) (Pfosten A unten) schwenkbar gelagert ist und die im vorderen Bereich über der Fensterbrüstung (7) ein blindes Dreieck, das sogenannte "Spiegeldreieck" (9) aufweist, wodurch die Seitenscheibe in diesem vorderen Dreieckbereich beschnitten ist,
wobei der stabile Türpfosten (6) mit relativ großem Querschnitt nach oben über die Fensterbrüstung (7) hinaus geführt und so angeordnet ist, daß sein oberes Türpfostenende und damit der Übergang zum anschließenden Fensterholm (8) bei geschlossener Fahrzeugtür hinter dem Spiegeldreieck (9) verläuft und von diesem zumindest teilweise abgedeckt ist,
dadurch gekennzeichnet,
daß der Türpfosten (6c) stark geneigt ist, wobei er schwellerseitig mit seinem unteren Türpfostenende möglichst weit vorne liegt und mit seinem oberen Türpfostenende in den Bereich hinter das Spiegeldreieick (9) geführt ist.

2. Karosserie nach Anspruch 1, dadurch gekennzeichnet, daß sich das obere Türpfostenende als Übergang zum Fensterholm (8) zu einem kleineren Querschnitt verjüngt.

3. Karosserie nach Anspruch 1 oder 2, dadurch gekennzeichnet, daß der Türpfosten (6) und der Fensterholm (8) als Leichtmetall-Strangprofile ausgeführt sind.

## Claims

1. Passenger car body shell,
having a front door opening (1) which is delimited downwardly by a sill beam (2) and in the frontal region by a post (3) (A-post), said post (3) being of solid construction in the lower region in the form of a doorpost (6) (A-post, bottom) and upwardly contiguous with the same towards the roof (5) there being a less solid region (A-post, top) in the form of a lateral window pillar (8) of smaller cross-section, and
having a vehicle door which is swivel-mounted at the doorpost (6) (A-post, bottom) and which in the frontal region over the window parapet (7) exhibits a blind triangle, the so-called "mirror triangle" (9), thereby foreshortening the side pane in this frontal triangular area,
the solid doorpost (6) of relatively large cross-section passing up and beyond the window parapet (7) and being so arranged that its top doorpost extremity and hence the transition to the contiguous window pillar (8) extends behind the mirror triangle (9) when the vehicle door is shut and is at least partially covered by said triangle,
characterised in that the doorpost (6c) is steeply inclined, on the side nearest the sill being situated with its lower doorpost extremity as far forward as possible and with its upper doorpost extremity passing into the region behind the mirror triangle (9).

2. Body shell according to claim 1, characterised in that the top doorpost extremity tapers to a smaller cross-section to form the transition to the window pillar (8).

3. Body shell according to claim 1 or 2, characterised in that the doorpost (6) and the window pillar (8) are in the form of extruded light-metal profiles.

## Revendications

1. Carrosserie de voiture particulière, comportant une baie de porte avant (1) qui est limitée vers le bas par un seuil (2) et, dans la région avant, par un montant (3) (montant A), ce montant (3) étant réalisé sous forme robuste et stable dans sa partie inférieure, en tant que montant de porte (6) (montant A en bas), auquel fait suite vers le haut, en direction du toit (5), une partie moins robuste et stable (montant A en haut), en tant qu'élément latéral de cadre de fenêtre (8) de plus petite section
une porte de voiture qui est montée pivotante sur le montant de porte (6) (montant A en bas) et qui comporte, dans la région avant au-dessus de l'appui de fenêtre (7), un triangle aveugle, appelé "triangle de rétroviseur" (9), ce qui fait que la vitre latérale est découpée dans cette région triangulaire antérieure,
le montant de porte (6) robuste et stable, de section relativement grande, s'étendant vers le haut au-delà de l'appui de fenêtre (7) et étant disposé de telle sorte que l'extrémité supérieure du montant de porte et, par conséquent, la transition avec l'élément de cadre de fenêtre (8) qui lui fait suite se trouvent, lorsque la porte de voiture est fermée, derrière le triangle de rétroviseur (9) et soient masquées au moins en partie par celui-ci,
caractérisée en ce que le montant de porte (6c) est fortement incliné, l'extrémité inférieure du montant de porte, côté seuil, étant située aussi loin que possible en avant et l'extrémité supérieure du montant de porte s'étendent dans la région située derrière le triangle de rétroviseur (9).

2. Carrosserie selon la revendication 1, caractérisée en ce que l'extrémité supérieure du montant de porte s'amincit pour prendre une section transversale plus petite, en tant que transition avec l'élément de cadre de fenêtre (8).

3. Carrosserie selon la revendication 1 ou 2, caractérisée en ce que le montant de porte (6) et l'élément de cadre de fenêtre (8) sont réalisés sous forme de profilé filé en métal léger.
